# EUROPÄISCHE PATENTSCHRIFT

(11) **EP 2 588 232 B1**
(45) Veröffentlichungstag und Bekanntmachung des Hinweises auf die Patenterteilung: **17.06.2020**
(21) Anmeldenummer: 11761486.7
(22) Anmeldetag: 25.06.2011
(51) Int. Cl.: B01J 23/22, B01J 23/30, B01J 35/00, B01J 35/10, B01J 21/06, B01D 53/94

(54) **KATALYSATORMATERIAL UND VERFAHREN ZU DESSEN HERSTELLUNG**
CATALYST MATERIAL AND PROCESS FOR THE PRODUCTION THEREOF
MATÉRIAU CATALYTIQUE ET PROCÉDÉ DE FABRICATION

(30) Priorität: 29.06.2010 DE 102010030684
(43) Veröffentlichungstag der Anmeldung: 08.05.2013
(73) Patentinhaber: Venator Germany GmbH, 47198 Duisburg (DE)
(72) Erfinder: GROTHE, Sonja, 46147 Oberhausen (DE); ROHE, Bernd, 47445 Moers (DE); EBBINGHAUS, Peter, 45699 Herten (DE); GOSCH, Elke, 47802 Krefeld (DE)
(74) Vertreter: Nobbe, Matthias
(86) Internationale Anmeldenummer: PCT/DE2011/075149
(87) Internationale Veröffentlichungsnummer: WO 2012/022328

(56) Entgegenhaltungen:
- US-A1- 2006 084 569
- US-B1- 6 380 128

## Beschreibung

Die Erfindung betrifft ein Katalysatormaterial, und genauer ein Katalysatormaterial auf TiO₂-Basis in Partikelform mit einem Gehalt an Metalloxiden oder und/Metalloxidvorstufen, Verfahren zu dessen Herstellung sowie dessen Verwendung bei der Entfernung von Schadstoffen, insbesondere von Stickoxiden, aus Verbrennungsgasen.

Bei der Verbrennung entstehende Stickoxide führen zu einer Reizung und Schädigung der Atmungsorgane (insbesondere bei Stickstoffdioxid), Entstehung des sauren Regens durch Bildung von Salpetersäure. Bei der Rauchgasentstickung (auch DeNOx genannt) werden solche Stickoxide wie Stickstoffmonoxid (NO) und Stickstoffoxide (NOₓ) beispielsweise aus dem Abgas von Kohle- oder Gasturbinenkraftwerken entfernt.

Als solche Maßnahmen zur Entfernung von Stickoxiden aus den Abgasen sind im Stand der Technik reduktive Verfahren wie selektive katalytische Verfahren (Selektive katalytische Reduktion, SCR) bekannt. Mit SCR bezeichnet man die Technik der selektiven katalytischen Reduktion von Stickoxiden in Abgasen von Feuerungsanlagen, Müllverbrennungsanlagen, Gasturbinen, Industrieanlagen und Motoren.

Viele solcher Katalysatoren enthalten TiO₂, wobei das TiO₂ als Katalysator selbst oder im Zusammenspiel mit Übergangsmetalloxiden oder Edelmetallen als Träger verwendet wird. Die chemische Reaktion am SCR-Katalysator ist selektiv, das heißt, es werden bevorzugt die Stickoxide (NO, NO₂) reduziert, während unerwünschte Nebenreaktionen (wie zum Beispiel die Oxidation von Schwefeldioxid zu Schwefeltrioxid) weitgehend unterdrückt werden.

Für die SCR-Reaktion gibt es zwei Arten von Katalysatoren. Die eine Art besteht im Wesentlichen aus Titandioxid, Vanadiumpentoxid und Wolframoxid. Die andere Art basiert auf einer Zeolith-Struktur. Bei beiden Systemen werden im Stand der Technik auch weitere Metallkomponenten zugegeben.

Im Falle der TiO₂-WO₃-V₂O₅ Katalysatoren dient primär das V₂O₅ als katalytisch aktive Spezies auf mit WO₃-beschichtetem TiO₂ (in Anatas-Modifikation). Die WO3-Beschichtung des TiO₂ soll dabei als Sperrschicht fungieren, um die Diffusion vom Vanadium in das TiO₂ und den damit verbundenen Aktivitätsverlust und die Rutilisierung zu verhindern.

Nach dem Stand der Technik gemäß der US 4085193 wird WO3-dotiertes TiO2 für katalytische Anwendungen, unter anderem als DeNOx-Katalysator, vorgeschlagen. Das daraus bekannte Verfahren basiert auf der Zugabe von Wolframkomponenten zu einer Titankomponente wie Metatitansäure, einer Titanoxihydrat- oder Titandioxid-Suspension) und anschließender Kalzination zur Einstellung der Oberfläche auf ca. 100 m²/g.

Vor der Weiterverarbeitung des Katalysatorrohstoffes ist oftmals jedoch ein zusätzlicher, aufwendiger Mahlschritt erforderlich. Dies ist dadurch begründet, dass das bereits wolframhaltige Titandioxidmaterial nach Austritt aus dem Kalzinationsofen, beziehungsweise nach der Temperaturbehandlung im Bereich zwischen 150 °C und 800 °C, in Form von Agglomeraten vorliegt, bei welchen die einzelnen Partikel durch Sinterbrücken oder ähnliche Verbindungen miteinander verbunden sind. Für höherwertige Katalysatoren, insbesondere Katalysatorwaben mit sehr geringer Stegbreit oder der Applikation des wolframhaltigen Titandioxides in Form eines so genannten "Washcoats" auf Wabenkörpern, ist eine Mahlung unerlässlich.

Großtechnisch wird dieser Mahlprozess bisher üblicherweise in einer Pendelmühle, z.B. Raymond-Mühle durchgeführt.

In der DE 102008033093 wird ein Verfahren zur Herstellung eines aus gegebenenfalls wolframhaltigem Titandioxidmaterial bestehenden Katalysatormaterials beschrieben, bei dem ein titandioxidhaltiges Katalysatormaterial als Zwischenprodukt durch Mahlung in einer Walzenmühle, insbesondere einer Gutbett-Walzenmühle, hergestellt wird und die, die Walzenmühle als das Zwischenprodukt verlassenden Schülpen nach der Mahlung keiner, insbesondere unmittelbar nachfolgenden Desagglomerations- und/oder Dispergierbehandlung unterworfen werden.

Für die katalytische Aktivität eines Titandioxid-haltigen Katalysators für die selektive Entfernung von Stickoxiden aus Auspuff- und Abgasen in Gegenwart von Ammoniak ist auch die Porosität des Katalysators von entscheidender Bedeutung. So beschreibt die EP 516262 einen geformten porösen Träger aus Titandioxidteilchen alleine oder aus einer Mischung von Titandioxidteilchen mit Teilchen von anderem, porösem, anorganischen Oxid, wobei der geformte Träger eine Gesamtporosität von 0,8 cm³/cm³ aufweist, die aus einer Mikroporosität, die Poren mit einem Porendurchmesser von 60 nm oder weniger umfasst, von 0,05 bis 0,5 cm³/cm³ und einer Makroporosität, die Poren mit Durchmessern größer als 60 nm umfasst, von 0,05 bis 0,5 cm³/cm³ gebildet ist. Dieser Katalysatorträger wird bevorzugt durch die Mischung von ausbrennbaren Materialien mit Titandioxid-Partikeln und der Formgebung dieser Mischung hergestellt.

US2006/084569A1 offenbart einen Katalysator, der aus Titanoxid, Vanadiumoxid und einem getragenen Metalloxid besteht, wobei das getragene Metalloxid ausgewählt ist aus der Gruppe bestehend aus Oxiden von Wolfram, Molybdän, Chrom, Scandium, Yttrium, Lanthan, Zirkonium, Hafnium, Niob, Tantal, Eisen, Ruthenium, Mangan und Mischungen derselben, das getragene Metalloxid auf dem Titanoxid getragen wird, wodurch ein titanoxidgetragenes Metalloxid gebildet wird, der Katalysator durch Ablagerung des Vanadiumoxids auf dem titanoxidgetragenen Metalloxid gebildet wird.

US6380128B1 offenbart einen Katalysator auf V₂O₅-Basis zum Abbau von Stickstoffoxiden, umfassend Vanadiumpentoxid und eines von Bariumoxid und Calciumoxid als aktive Komponenten, die auf einen Titandioxidträger geladen sind, wobei der Titandioxidträger durch ausreichendes Trocknen und Kalzinieren einer Metatitanat (TiO(OH)₂)-überwiegenden Schlämme hergestellt wird, die bei der Herstellung von Titandioxid als Pigmente aus Ilmenit erhalten wurde, und wobei das Vanadiumpentoxid in einer Menge von etwa 1.0 Gew.-% bis etwa 10 Gew.-%, bezogen auf ein Gesamtgewicht des Katalysators, geladen wird, vorausgesetzt, dass die Menge an Vanadiumpentoxid, die auf den Titandioxidträger geladen ist, etwa 0,145 Gramm pro Quadratmeter einer spezifischen Oberfläche des Titandioxidträgers nicht übersteigt.

Die Aufgabe besteht somit in der Bereitstellung eines Katalysatormaterials, das gegenüber den im Stand der Technik bekannten Materialien verbesserte Eigenschaften zeigt.

Die Aufgabe wird gelöst durch Bereitstellung eines Katalysatormaterials auf TiO₂-Basis in Partikelform mit einem Gehalt an Metalloxid, ausgewählt aus Vanadium und Wolframoxid, und/oder Vorstufen davon, wobei die mittlere Partikelgröße D₅₀ nach Dispergierung bei D₅₀ < 1,0 µm beträgt, die Größe der Mesoporen 3-50 nm beträgt und das Volumen der Mesoporen (Mesoporenvolumen) der Partikel mehr als 0,260 cm³/g beträgt.

Zur Bestimmung des Mesoporenvolumens wird das Verfahren der N₂ - Porosimetrie durchgeführt. Das Prinzip ist weiter unten beschrieben.

Zur Bestimmung der mittleren Partikelgrößen D50 nach Dispergierung wird das pulverförmige Katalysatormaterial in Wasser mittels Ultraschallfinger (bei maximaler Leistung, Hersteller: Branson Sonifier 450, Verwendung einer Amplitudenerhöhung durch Booster Horn "Gold", ,1/2 " Titanrüssel mit austauschbarer, flacher Arbeitsspitze) für 5 Minuten dispergiert. Die Partikelgrößenbestimmung wird mittels Lasergranulometrie durchgeführt. Dabei wird als mittlere Partikelgröße D50, der D50-Median der Volumenverteilung in Volumenprozent bezeichnet.

Das erfindungsgemäße Katalysatormaterial weist gegenüber den aus dem Stand der Technik bekannten Materialien ein höheres Mesoporenvolumen auf, was zu einer höheren katalytischen Aktivität führt. Ferner zeigt das erfindungsgemäße Katalysatormaterial in Form eines wolframhaltigen und/oder vanadiumhaltigen Titandioxids eine sehr gute Dispergierbarkeit und eine optimierte Porenverteilung.

Ein solches wolframhaltiges Titandioxid, das schon als Pulver, d.h. vor der Applikation, eine optimierte Porenverteilung besitzt, ist im Stand der Technik nicht bekannt.

In einer weiteren Ausführungsform des Katalysatormaterials besitzen 90% der Partikel eine Partikelgröße von weniger als 1,5 µm, und die mittlere Partikelgröße (D50-Median der Volumenverteilung in Volumenprozent, jeweils mittels Lasergranulometrie bestimmt) beträgt weniger als 1,0 µm.

Darüber hinaus weisen die Poren des erfindungsgemäßen bevorzugt wolframhaltigen Katalysatormaterials überraschenderweise eine bimodale Mesoporenverteilung mit Maxima zwischen 8 bis 12 nm und 15 bis 20 nm auf. Die im Stand der Technik bekannten Materialien haben demgegenüber in der Regel eine annähernd monomodale Mesoporenverteilung mit einem Hauptmaximum bei 4 bis 7 nm. Die Erfindung betrifft daher auch solche erfindungsgemäßen Katalysatormaterialien auf TiO₂-Basis mit einer bimodalen Mesoporenverteilung mit einem Maximum zwischen 8 bis 12 nm und einem weiteren Maximum zwischen 15 bis 20 nm.

Im Rahmen der Beschreibung der Erfindung wird die in der Literatur gängige Definition der Porengrößen verwendet, wie sie beispielsweise in "Fundamentals of Industrial Catalytic Processes", R.J. Farrauto, C. H. Bartholomew, Blackie Academic & Professional, 1997, Seite 78 beschrieben ist). Diese Schrift definiert Poren mit Durchmessern von d_{Pore}> 50 nm als Makroporen, Poren mit d_{Pore} = 3-50 nm als Mesoporen und Poren mit d_{Pore} < 3 nm als Mikroporen.

Die Porengrößenverteilung selbst nimmt Einfluss auf die Formselektivität, und es wird eine schnellere Diffusion des Gases in und aus den Partikeln infolge größerer Porenradien ermöglicht. Dies führt gleichzeitig zu einer geringeren Neigung zur Porenverstopfung infolge der größeren Porenradien. Zudem wird die Imprägnierung des porösen, wolframhaltigen Titandioxides zusätzlich mit weiteren aktiven Metalloxiden (z.B. Vanadiumoxid) durch größere Porenradien erleichtert, so dass ein größerer Teil der Oberfläche mit Vanadiumoxid belegt werden kann und somit katalytisch aktiv ist.

Zur Applikation eines beispielsweise wolframhaltigen Titandioxids in Form eines Washcoats wird das Titandioxid in Wasser dispergiert. Üblicherweise wird der pH-Wert der Suspension auf pH-Werte < 7 eingestellt. Das Titandioxid wird vorzugsweise bis zum Erreichen einer definierten Partikelgröße gemahlen werden. Von einer guten Dispergierbarkeit spricht man dann, wenn die Partikelgröße nach der Mahlung bei d50 < 1 µm, bevorzugt bei d50 < 0.8 µm liegt.

Die Partikelgrößenverteilung des (z.B. wolframhaltigen) Titandioxides im Washcoat bestimmt im Wesentlichen die mechanischen Eigenschaften des fertigen Washcoats, seine Adhäsion zum Substrat und die rheologischen Eigenschaften der Suspension während des Washcoat-Prozesses. Eine grobe Partikelverteilung im Washcoat kann zur schlechten Adhäsion des Washcoats zum Substrat führen. Die Herstellung eines gut dispergierbaren (wolframhaltigen) Titandioxids ohne die Durchführung eines kostenintensiven Mahlschrittes ist im Stand der Technik nicht bekannt, wird aber erfindungsgemäß ermöglicht.

Infolge der besseren Dispergierbarkeit des erfindungsgemäßen Katalysatormaterials, d.h. der geringeren Partikelgröße nach der Dispergierung, wird die Adhäsion des hergestellten Washcoates verbessert und die zugängliche Oberfläche erhöht.

Das erfindungsgemäße Katalysatormaterial auf TiO₂-Basis hat bevorzugt einen Gehalt an Metalloxid und/oder Vorstufen davon von weniger als 30 Gew.-% bezogen auf die Gesamtmenge an eingesetztem Titandioxid und Metallverbindung. Unter Vorstufen davon werden erfindungsgemäß beispielsweise hydratisierte Vorformen von Oxiden, Hydroxide etc verstanden, die sich thermisch in die Metalloxide umwandeln. Geeignet ist dabei ein Metalloxid, besonders WO₃, in einer Menge von 8 bis 15 Gew.-% bezogen auf die Gesamtmenge an eingesetztem Titandioxid und Metalloxid, bzw. -verbindung. Besonders bevorzugt ist dabei, wenn das Metalloxid oder dessen Vorstufe dem Katalysatormaterial über die Zugabe von einer Ammoniumverbindung wie beispielsweise Ammoniumwolframat zugeführt wird. Unter Metalloxidvorstufen davon werden erfindungsgemäß beispielsweise hydratisierte Vorformen von Oxiden, Hydroxiden etc. verstanden, die sich thermisch in die Metalloxide umwanden.

Seitens der Erfinder wurde dabei herausgefunden, dass die spezifische Oberfläche des erfindungsgemäßen Katalysatormaterials bei Werten von 100 m²/g, 200m²/g und 300 m²/g jeweils einer Menge von 15 Gew.-% , 30 Gew.-% und 45 Gew.-% Metalloxid, jeweils bezogen auf die Gesamtmenge an eingesetztem Titandioxid und Metalloxid und/oder Vorstufen davon entspricht. Die Erfindung betrifft somit auch Katalysatormaterialien mit einem Gehalt von bis zu 15, bzw. 45 Gew.-% und der jeweils entsprechenden spezifischen Oberfläche.

Das erfindungsgemäße Katalysatormaterial ist erhältlich über ein Verfahren, bei dem eine Suspension mit einem Gehalt an Metatitansäure TiO(OH)₂ von vorzugsweise 200 bis 400 g TiO₂ / L vorgelegt wird, die Suspension auf einen pH Wert im Bereich von 3 bis 8 eingestellt wird und nach einer Reifezeit, bevorzugt in einem Temperaturbereich von 60 bis 100°C über einen Zeitraum von bis zu 180 Minuten, einer Hydrothermalbehandlung, bevorzugt in einem Temperaturbereich von 150 bis 300°C über einen Zeitraum von bis zu 24 Stunden unterzogen wird, die erhaltene Suspension gewaschen und abfiltriert wird und das abfiltrierte teilchenförmige Material getrocknet wird, wobei der Suspension im Verlauf des Verfahrens eine lösliche Verbindung des Metalls zugesetzt wird.

Die Zugabe der löslichen Metallverbindung kann vor oder nach der Hydrothermalbehandlung erfolgen, auch die Zugabe vor der Einstellung des pH-Wertes auf den Bereich 3 bis 8 ist möglich. Die Zugabe der löslichen Metallverbindung findet bevorzugt nach der pH-Einstellung vor der Hydrothermalbehandlung statt. Es ist allerdings auch möglich, die Zugabe der Metallverbindung in mehreren Schritten durchzuführen, d.h. sowohl vor, als auch nach der Hydrothermalbehandlung Teilmengen zuzusetzen.

Als lösliche Metallverbindung kann eine solche Verbindung eingesetzt werden, die sich thermisch in ein katalytisch aktives Metalloxid und/oder Metalloxidvorstufe umwandelt, z.B. zu SnO₂, CeO₂, VOₓ, CrOₓ, MoOₓ, WOₓ, MnOₓ, FeOₓ und NiO und CoOx. Erfindungsgemäß wird besonders eine Vanadium- und/oder Wolframverbindung, vorzugsweise in Form eines Vanadates oder Wolframates zugesetzt. Ganz besonders bevorzugt ist die Verwendung von Ammoniummetawolframat.

Die Einstellung des pH-Wertes kann erfindungsgemäß mit jedem Neutralisierungsmittel erfolgen, bevorzugt ist jedoch die Verwendung von Ammoniak, da insbesondere das Einschleppen von Alkaliionen vermieden wird.

Vor der Einstellung des pH-Wertes kann optional die Zugabe von Phosphorsäure erfolgen. Hierdurch wird erreicht, dass die Temperaturstabilität des Endproduktes erhöht wird.

Nach der Hydrothermal-Behandlung kann optional die Zugabe von Ammoniumsulfat erfolgen. Hierdurch wird erreicht, dass eine gezielte Einstellung des Sulfatgehaltes ermöglicht wird. Dadurch wird ermöglicht, dass die Temperaturstabilität und die katalytische Aktivität weiter erhöht wird.

Mithilfe der Erfindung ist es somit möglich, die Nachteile der Materialien des Standes der Technik zu überwinden und insbesondere ein Verfahren zur Herstellung eines TiO₂-haltigen Katalysatormaterials aufzuzeigen, das zu Katalysatormaterialien auf Basis mit TiO₂ in der Anatasform führt, wobei das Katalysatormaterial eine gute Dispergierbarkeit und eine bimodale Mesoporenverteilung besitzt.

Dies wird nach Einschätzung der Erfinder im Wesentlichen durch die Anwendung des Hydrothermalverfahrens ermöglicht. Dabei wird, anders als bei der Glühung, das TiO₂ (vorliegend als Titanoxidhydrat) nach der Filtration und Waschung und pH-Einstellung der Suspension auf pH 3 - 8 in einen Druckbehälter (Autoklav) gegeben und über einen Zeitraum von einer Stunde bis mehreren (z.B. 5) Tagen bei Temperaturen >100°C gehalten. Dieser Verfahrensschritt wird als Hydrothermalbehandlung bezeichnet (vgl. auch Ullmanns Enzyklopädie der Technischen Chemie, 4. Auflage, 1978, Band 15, S. 117ff: K. Recker, Einkristallzüchtung). Ein bevorzugter Zeitraum für die Hydrothermalbehandlung des TiO₂ (vorliegend als Titanoxidhydrat) ist 2 bis 24 Stunden, besonders bevorzugt 4 bis 8 Stunden. So kann ein homogeneres Kristallwachstum durch die hydrothermale Behandlung in der wässrigen Suspension unter Rühren erzielt werden, da im Gegensatz zur Kalzination keine "hot spots" auftreten.

Das nach dem erfindungsgemäßen Verfahren erhältliche Katalysatormaterial ist, besonders als getrocknetes Material, direkt weiter verwendbar und braucht in der Regel keiner Mahlung unterzogen werden.

Das erfindungsgemäße Verfahren kann somit in summarischer Darstellung folgende Verfahrensschritte vorsehen:
- Vorlage des Ausgangsmaterials in Form einer Titanoxidhydratsuspension
- Optionale Zugabe von Phosphorsäure
- Optionale Zugabe einer vorzugsweise wasserlöslichen Metallverbindung, insbesondere Wolframverbindung (ganz besonders Ammoniummetawolframat)
- pH-Einstellung auf pH 3- 8 (insbesondere mit Hilfe von Ammoniak)
- Optionale Zugabe einer vorzugsweise wasserlöslichen Metallverbindung, insbesondere Wolframverbindung (ganz besonders Ammoniummetawolframat)
- Reifezeit
- Hydrothermal-Behandlung
- Filtration und Waschung
- Optionale Zugabe von Ammoniumsulfat
- Optionale Zugabe einer vorzugsweise wasserlöslichen Metallverbindung, insbesondere Wolframverbindung (ganz besonders Ammoniummetawolframat)
- Trocknung (vorzugsweise Sprühtrocknung oder Mahltrocknung)
- Optionale Mahlung.

Die Zugabe der Metallverbindung, besonders einer Wolframverbindung, ist erfindungsgemäß in verschiedenen Verfahrensstufen möglich. So können auch Teilmengen der Gesamtmenge an Wolframkomponente in verschiedenen Verfahrensstufen, z.B. vor der Einstellung des pH-Wertes und vor der Hydrothermalbehandlung zugegeben werden.Überraschend wurde gefunden, dass ein auf diese Weise hergestelltes Katalysatormaterial eine gute Dispergierbarkeit und eine bimodale Mesoporenverteilung besitzt.

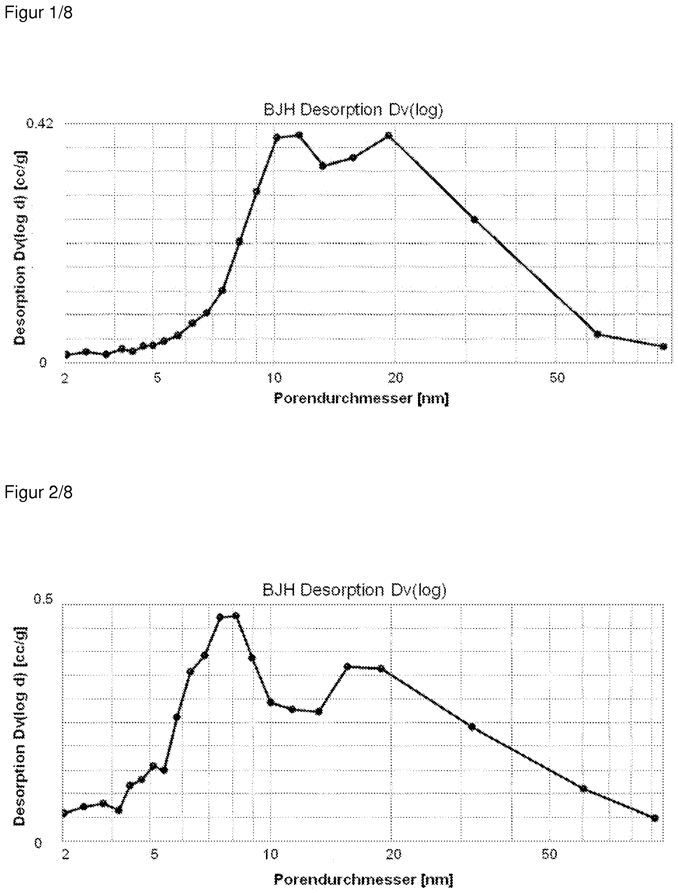

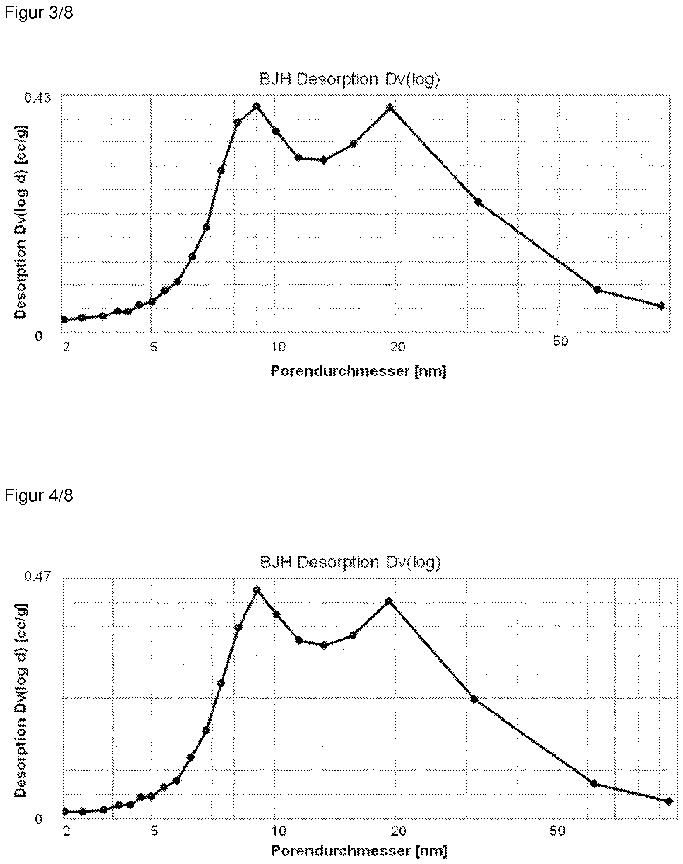

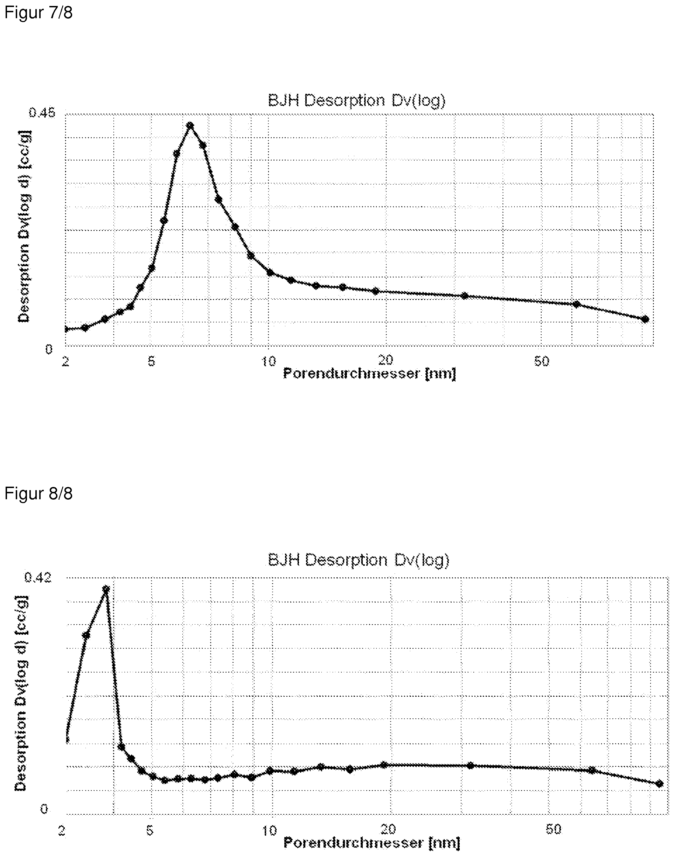

Die Erfindung wird anhand der nachfolgenden Versuche und Vergleichsversuche sowie der Figuren 1-8 weiter erläutert.

### Erfindungsgemäße Herstellungsbeispiele

Als Ausgangsmaterialien wurden folgende Stoffe eingesetzt:

| **Stoffe** | **Bemerkungen** | **Konzentration** |
|---|---|---|
| Titanoxidhydratsuspension | TiO(OH)₂ bzw. TiO₂ in Anatasmodifikation | 358 g TiO₂/l |
| Ammoniummetawolframat-Lsg. (AMW) | hergestellt aus AMW (H.C. Starck, Lot. AMW01706) mit 91,36 % WO₃, bei RT gelöst | 39,4%ig WO₃ |
| Phosphorsäure | z.A. Qualität, von Fa. Merck | 89 %ig, ρ= 1,75 g/mL |
| Ammoniak | z.A. Qualität, von Fa. Merck | 25 %ig |

### Herstellungsbeispiel 1

In ein 10L-Becherglas wurden 5,6 L der o.g. Titanoxidhydratsuspension gegeben und diese mit 1067 g TE-Wasser verdünnt. Unter Rühren wurde auf 60 °C erwärmt. Der pH-Wert wurde durch Zugabe von wässriger Ammoniak-Lösung auf pH = 8,0 eingestellt. In einen 10 L Druckbehälter wurden ca. 5800 mL Suspension gefüllt. Die Suspension wurde 4 h bei ca. 180 °C und 10 bar HT-behandelt. Nach Abkühlung über Nacht hatte die Suspension noch ca. 65 °C. Die Suspension wurde filtriert. Die Suspension wurde mit ca. 8 L/kg TiO₂ (=̂ 13,1 L) TE-Wasser gewaschen. Der Filterkuchen wurde mit TE-Wasser angeschlämmt, und die Suspension wurde unter Rühren mit 476 g AMW-Lösung versetzt. Da die Suspension während der Zugabe eindickte, wurde mit TE-Wasser auf ca. 7 L verdünnt. Die Suspension wurde sprühgetrocknet. Die Ergebnisse sind in Tabelle 1 unten angegeben.

### Herstellungsbeispiel 2

In ein 10L-Becherglas wurden 5,6 L der o.g. Titanoxidhydratsuspension gegeben und diese mit 1067 g TE-Wasser verdünnt. Dann wurde der pH-Wert mit wässriger Ammoniak-Lösung auf pH = 3,0 eingestellt. Unter Rühren wurde auf 60 °C erwärmt und zunächst 1 h diese Temperatur gehalten. Anschließend wurden 828 g AMW-Lösung zugegeben. In einen 10 L Druckbehälter wurden ca. 5800 mL Suspension gefüllt. Die Suspension wurde 4 h bei ca. 180 °C und 10 bar HT-behandelt. Nach Abkühlung über Nacht hatte die Suspension noch ca. 65 °C. Die Suspension wurde filtriert. Die Suspension wurde mit ca. 6 L/kg TiO₂ (=̂ 10 L) TE-Wasser gewaschen. Der Filterkuchen wurde mit TE-Wasser auf ca. 5 L angeschlämmt, und die Suspension wurde sprühgetrocknet.

### Herstellungsbeispiel 3

In ein 10L-Becherglas wurden 5,6 L der o.g. Titanoxidhydratsuspension gegeben und diese mit 1067 g TE-Wasser verdünnt. Es wurden 16 mL Phosphorsäure zugegeben (pH 1,8). Unter Rühren wurde auf 60 °C erwärmt (pH 1,4). Dann wurden in ca. 24 min 354 mL Ammoniak (15 mL/min) zu der Suspension gegeben, um den pH-Wert auf 5,0 einzustellen. In einen 10 L Druckbehälter wurden ca. 5800 mL Suspension gefüllt. Die Suspension wurde 4 h bei ca. 180 °C und 10 bar HT-behandelt. Nach Abkühlung übers Wochenende hatte die Suspension noch ca. 25 °C. Die Suspension wurde filtriert. Die Suspension wurde mit ca. 6 L/kg TiO₂ (=̂ 10 L) TE-Wasser gewaschen. Der Filterkuchen wurde mit TE-Wasser angeschlämmt, die Suspension wurde unter Rühren mit 476 g AMW-Lösung versetzt. Da die Suspension während der Zugabe eindickte, wurde mit TE-Wasser auf ca. 7 L verdünnt. Die Suspension wurde sprühgetrocknet.

### Herstellungsbeispiel 4

In ein 10L-Becherglas wurden 1955 mL der o.g. Titanoxidhydratsuspension gegeben und diese mit 5045 g TE-Wasser verdünnt. Es wurden 5,6 mL Phosphorsäure zugegeben (pH 1,8). Unter Rühren wurde auf 60 °C erwärmt (pH 1,7). Dann wurden in ca. 8 min 125 mL Ammoniak (15 mL/min) zu der Suspension gegeben um den pH-Wert auf 6,9 einzustellen. In einen 10 L Druckbehälter wurden ca. 5600 mL Suspension gefüllt. Die Suspension wurde 4 h bei ca. 180 °C und 10 bar HT-behandelt. Nach Abkühlung über Nacht hatte die Suspension noch ca. 60 °C. Die Suspension wurde mit ca. 2 L/kg TiO₂ (=̂ 1,1 L) TE-Wasser gewaschen. Der Filterkuchen wurde mit TE-Wasser angeschlämmt, die Suspension wurde unter Rühren mit 164 g AMW-Lösung versetzt. Da die Suspension während der Zugabe eindickte, wurde mit TE-Wasser auf ca. 3,5 L verdünnt. Die Suspension wurde sprühgetrocknet.

In Tabelle 1 sind die Analysen der Produkte der Herstellungsbeispiele 1 bis 4 und Bestimmung der Oberfläche, der Porengröße und der thermischen Stabilität angegeben.

| **Tabelle 1 - Herstellungsbeispiele 1 bis 4** | | | | | |
|---|---|---|---|---|---|
| | Verfahren | 1 | 3 | 2 | 4 |
| Porenvolumen | N2-Ads./ Total | 0.350 cm³/g | 0.276 cm³/g | 0.300 cm³/g | 0.294 cm³/g |
| Mesoporenvolumen | N2-Ads./ BJH | 0.340 cm³/g | 0.274 cm³/g | 0.297 cm³/g | 0.293 cm³/g |
| Porendurchmesser | N2-Ads./ BJH-Des. | 8.1 bis zu > 15.6 nm* | 11.5 bis zu >19.3 nm* | 9.0 bis zu > 19.2 nm* | 9,0 bis zu > 19.3 nm* |
| Spez.Oberfläche Endprodukt | | 128 m² | 73.9 m² | 88.6 m² | 83.4 m² |
| d50 Helos UF | | 0.68 µm | 0.46 µm | 0.51 µm | 0.47 µm |
| B90/10 Helos UF | | 0.94 µm | 0.78 µm | 0.83 µm | 0.80 µm |

Zur Bestimmung des Mesoporenvolumens wird wie oben erwähnt das Verfahren der N₂-Porosimetrie durchgeführt. Das Prinzip ist beispielsweise in. "Fundamentals of Industrial Catalytic Processes", R.J. Farrauto, C. H. Bartholomew, Blackie Academic & Professional, 1997, Seite 122 beschrieben. Zur Probenvorbereitung werden die Proben dabei unter definierten Bedingungen getrocknet (16 Stunden im Vakuum und 1 Stunde im Vakuum bei T = 180°C). Zur Messung wird z.B. das Messgerät "Autosorb-6" der Fa. Quantachrome verwendet. Zur Bestimmung des Mesoporenvolumens wird die Auswertung nach BJH Methode (nach Barret, Joyner und Halenda) durchgeführt.

Die Porenverteilung der in den Herstellungsbeispielen 1 bis 4 hergestellten Materialien ist in den beigefügten Figuren 1 bis 4 gezeigt.

### Vergleichsversuche

Auf gleiche Weise wie bei den erfindungsgemäßen Herstellungsbeispielen wurden für die Vergleichsversuche 1 bis 4 die Suspensionen von Titanoxidhydratsuspension in den vergleichbaren Konzentrationen angesetzt und wie in der Tabelle 2 unten angegeben behandelt. Als Ausgangsmaterialien wurden folgende Stoffe eingesetzt:

| **Stoffe** | **Bemerkungen** | **Konzentration** |
|---|---|---|
| Titanoxidhydratsuspension | TiO(OH)2 bzw. TiO₂ in Anatasmodifikation | 386 g TiO₂/l |
| Ammoniummetawolframat-Lsg. (AMW) | hergestellt aus AMW (H.C. Starck, Lot. AMW01706) mit 91,36 % WO₃, bei RT gelöst | 40 %ig WO₃ |
| Phosphorsäure | z.A. Qualität, von Fa. Merck | 89 %ig, ρ= 1,75 g/mL |
| Ammoniak | z.A. Qualität, von Fa. Merck | 25 %ig |

### Vergleichsbeispiel 1

1815 mL der o.g. Titanoxidhydratsuspension wurden in ein 5 L Becherglas gegeben und mit 1815 mL Wasser verdünnt. Es wurde ein pH-Wert von 1,7 gemessen. Unter Rühren wurde mit Ammoniak auf pH 6,8 eingestellt. Es wurde für 2 h bei RT gerührt. Die Suspension wurde abgenutscht und mit 5,6 L TE-Wasser (= 8 L/kg TiO₂) gewaschen. Der Filterkuchen (1810,4 g = 38,67 % TiO₂) wurde aufgeteilt. 776,0 g Filterkuchen wurden mit den Dissolver in TE-Wasser eindispergiert und auf ca. 1,5 L verdünnt. Die 83,25 g AMW-Lösung wurden in 15 min unter Rühren zugetropft. Es wurde 1 h bei RT nachgerührt. Die Suspension wurde in eine Porzellanschale gegeben. Über Nacht erfolgte die Hordentrocknung bei 150 °C. Es erfolgte eine Glühung bei 460 °C. Das Produkt wurde gemahlen.

### Vergleichsbeispiel 2

Der restliche Filterkuchen aus Vergleichsbeispiel 1 wurde bei 150 °C über Nacht im Trockenschrank getrocknet, gemörsert und in zwei Hälften aufgeteilt. Eine Hälfte wurde mit 55,6 g AMW-Lösung gemischt. Es erfolgte eine Glühung bei 460 °C im Nabertherm-Ofen. Das Produkt wurde gemahlen.

### Vergleichsbeispiel 3

Die zweite Hälfte aus Vergleichsbeispiel 2 wurde bei 460 °C im Nabertherm-Ofen kalziniert. Dann erfolgte eine Mischung mit 55,6 g AMW-Lösung. Das Produkt wurde gemahlen.

### Vergleichsbeispiel 4

Die Nachbehandlung erfolgte im 5 L Laborreaktor. Dazu wurde 1500 mL der o.g. Titanoxidhydratsuspension in das Produktgefäß gegeben und mit 1500 mL Wasser verdünnt.

**Nachbehandlungsbedingungen :**

| | |
|---|---|
| Temperatur vor und bei AMW- Zugabe: | 80 °C |
| AMW-Zugabe: | innerhalb von 20 min (160,8 g) |
| Temperatur nach AMW- Zugabe: | Siedetemperatur |
| Reifung: | 2 h bei Siedetemperatur |
| H₃PO₄-Zugabe: | nach der Reifung bei ca. 90 °C (6,17 g) |
| Nachrühren nach der H₃PO₄-Zugabe: | ca. 30 min dabei Abkühlung auf ca. 40 °C |
| pH-Wert der Suspension: | 1,0 |

Die Suspension wurde abgenutscht. Der Filterkuchen wurde bei 150 °C hordengetrocknet. Das Produkt wurde im bei 460 °C geglüht und anschließend mit dem Braunmix-Mahlaufsatz gemahlen.

| **Tabelle 2 - Vergleichsversuche 1 bis 4** | | | | | |
|---|---|---|---|---|---|
| Vers.-Nr. | | 1 | 2 | 3 | 4 |
| Porenvolumen | N2-Ads./Total | 0,254 cm³/g* | 0,225 cm³/g* | 0,198 cm³/g* | 0,246 cm³/g* |
| Mesoporenvolumen | N2-Ads./ BJH | 0,250 cm³/g* | 0,216 cm³/g* | 0,191 cm³/g* | 0,225 cm³/g* |
| Porendurchmesser | N2-Ads./Average | 9,2 nm | 7,6 nm | 9,6 nm | 6,7 nm |
| Porendurchmesser | N2-Ads./BJH-Des. | 5,1 bis >50 nm | 4,4 bis > 50 nm | 6,3 bis > 50 nm | 3,8 bis > 50 nm |
| spez. Oberfläche Endprodukt | N2-Ads./5P-BET | 111 m²/g | 119 m²/g | 82,7 m²/g | 146 m²/g |
| d50 Helos UF | | 1,03 µm | 1,05 µm | 1,03 | 1,01 µm |
| B90/10 Helos UF | | 1,54 µm | 1,60 µm | 1,53 µm | 1,52 µm |

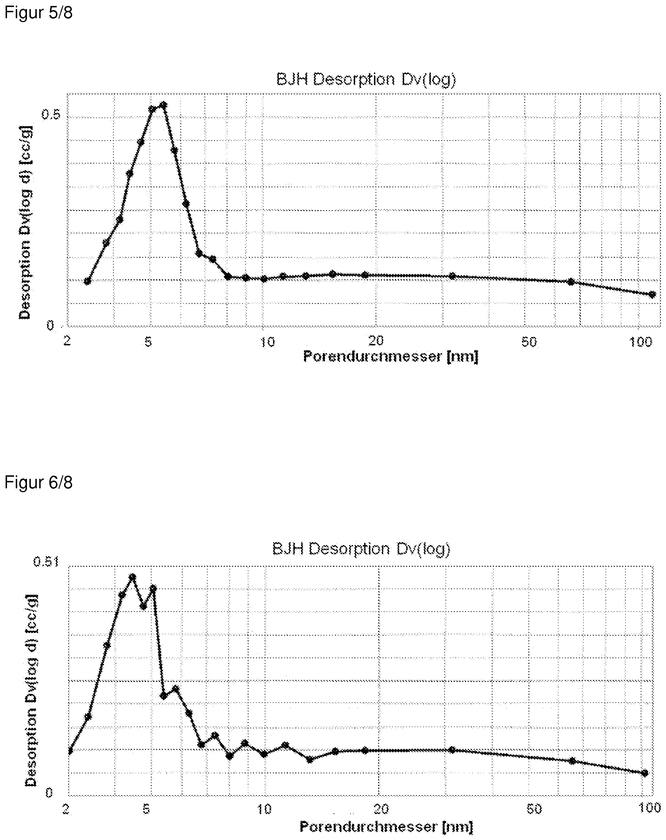

Die Porenverteilung der in den Vergleichsbeispielen 1 bis 4 hergestellten Materialien ist in den beigefügten Figuren 5 bis 8 gezeigt.

Wie bei Vergleich der Ergebnisse der Herstellungsbeispiele und der Vergleichsbeispiele ersichtlich wird, weisen die erfindungsgemäßen Materialien gegenüber nach dem Stand der Technik hergestellten Materialien verbesserte Eigenschaften hinsichtlich Teilchendurchmesser, Porengröße, sowie Porendurchmesser auf.

## Patentansprüche

1. Katalysatormaterial auf TiO₂-Basis in Partikelform mit einem Gehalt an Metalloxid, ausgewählt aus Vanadiumoxid und Wolframoxid, und/oder Vorstufen davon, wobei die mittlere Partikelgröße D₅₀ nach Dispergierung D₅₀ < 1,0 µm beträgt, die Größe der Mesoporen 3-50 nm beträgt und das Volumen der Mesoporen der Partikel mehr als 0,260 cm³/g beträgt.

2. Katalysatormaterial auf TiO₂-Basis nach Anspruch 1 mit einem Gehalt an Metalloxid und/oder Vorstufen davon in einer Menge von weniger als 30 Gew.-% bezogen auf die Gesamtmenge an eingesetztem Titandioxid und Metalloxid.

3. Katalysatormaterial auf TiO₂-Basis nach Anspruch 1 mit einem Gehalt an Metalloxid und/oder Vorstufen davon, eingesetzt als Wolframat in einer Menge von 8 bis 15 Gew.-% der Gesamtmenge an eingesetztem Titandioxid und Metalloxid.

4. Verfahren zur Herstellung des Katalysatormaterials auf TiO₂-Basis nach einem der Ansprüche 1 bis 3, bei dem eine wässrige Suspension mit einem Gehalt an Titanoxidhydrat TiO(OH)₂ von vorzugsweise 200 bis 400 g TiO₂ / L vorgelegt wird, die Suspension auf einen pH Wert im Bereich von 3 bis 8 eingestellt wird und nach einer Reifezeit einer Hydrothermalbehandlung unterzogen wird, die erhaltene Suspension gewaschen und abfiltriert wird und das abfiltrierte teilchenförmige Material getrocknet wird, wobei der Suspension im Verlauf des Verfahrens eine lösliche Verbindung eines Metalls, ausgewählt aus Vanadium und Wolfram, zugesetzt wird.

5. Verfahren nach Anspruch 4, bei dem die Zugabe der löslichen Verbindung des Metalls vor der Hydrothermalbehandlung erfolgt.

6. Verfahren nach Anspruch 5, bei dem die Zugabe der löslichen Verbindung des Metalls nach der Einstellung des pH-Wertes auf den Bereich 3-8 und vor der Hydrothermalbehandlung erfolgt.

7. Verfahren nach einem der Ansprüche 5 oder 6, bei dem als Metall eine Vanadium- oder Wolframverbindung, vorzugsweise in Form eines Vanadates oder Wolframates, besonders bevorzugt Ammoniummetawolframat zugesetzt wird.

8. Verfahren nach einem der Ansprüche 5 bis 7, bei dem die Suspension mit Ammoniak auf einen pH Wert im Bereich von 3 bis 8 eingestellt wird.

9. Verwendung des nach einem Verfahren der Ansprüche 5 bis 8 hergestellten Katalysatormaterials oder des Katalysatormaterials auf TiO₂-Basis nach einem der Ansprüche 1 bis 3 zur Herstellung eines Abgaskatalysators, in chemischen Katalyseverfahren oder als Photokatalysator.

10. Verwendung des nach einem Verfahren der Ansprüche 5 bis 8 hergestellten Katalysatormaterials oder des Katalysatormaterials auf TiO₂-Basis nach einem der Ansprüche 1 bis 3 zur Entfernung von Schadstoffen, insbesondere von Stickoxiden in Abgasen.

## Claims

1. Catalyst material based on TiO₂ in particle form having a content of metal oxide selected from among vanadium oxide and tungsten oxide and/or precursors thereof, wherein the average particle size D₅₀ after dispersing is D₅₀ < 1.0 µm, the mesopore size is 3-50 nm and the mesopore volume of the particles is greater than 0.260 cm³/g.

2. The catalyst material based on TiO₂ as claimed in claim 1 having a content of metal oxide and/or precursors thereof in an amount of less than 30% by weight based on the total amount of titanium dioxide and metal oxide used.

3. The catalyst material based on TiO₂ as claimed in claim 1 having a content of metal oxide and/or precursors thereof, used as tungstate, in an amount of from 8 to 15% by weight of the total amount of titanium dioxide and metal oxide used.

4. Process for producing the catalyst material based on TiO₂, in particular as claimed in any of claims 1 to 3, wherein an aqueous suspension having a content of titanium oxide hydrate TiO(OH)₂ of preferably from 200 to 400 g of TiO₂/l is initially charged, the suspension is brought to a pH in the range from 3 to 8 and, after a ripening time, is subjected to a hydrothermal treatment, the suspension obtained is washed and filtered and the particulate material filtered off is dried, wherein a soluble compound of a metal selected from among vanadium and tungsten is added to the suspension during the course of the process.

5. The process as claimed in claim 4, wherein the addition of the soluble compound of the metal is carried out before the hydrothermal treatment.

6. The process as claimed in claim 5, wherein the addition of the soluble compound of the metal is carried out after adjustment of the pH to the range 3-8 and before the hydrothermal treatment.

7. The process as claimed in any of claims 5 or 6, wherein a vanadium compound or tungsten compound, preferably in the form of a vanadate or tungstate, particularly preferably ammonium metatungstate, is added as metal.

8. The process as claimed in any of claims 5 to 7, wherein the suspension is brought to a pH in the range from 3 to 8 by means of ammonia.

9. The use of the catalyst material produced by a process as claimed in any of claims 5 to 8 or of the catalyst material based on TiO₂ as claimed in any of claims 1 to 3 for producing an offgas catalyst, in chemical catalysis processes or as photocatalyst.

10. The use of the catalyst material produced by a process as claimed in any of claims 5 to 8 or of the catalyst material based on TiO₂ as claimed in any of claims 1 to 3 for removing pollutants, in particular nitrogen oxides, in offgases.

## Revendications

1. Matériau catalyseur sur base de TiO₂ sous forme particulaire, disposant d'une teneur en oxyde métallique sélectionné parmi l'oxyde de vanadium et l'oxyde de tungstène et/ou des précurseurs de ceux-ci, la taille moyenne des particules D₅₀ après dispersion s'élevant à D₅₀ < 1,0 µm, la taille des mésopores s'élevant à de 3 à 50 nm et le volume des mésopores des particules s'élevant à plus de 0,260 cm³/g.

2. Matériau catalyseur sur base de TiO₂ selon la revendication 1, disposant d'une teneur en oxyde métallique et/ou en précurseurs de ceux-ci dans une quantité de moins de 30 % en poids, rapportés à la quantité totale du dioxyde de titane et de l'oxyde métallique mis en œuvre.

3. Matériau catalyseur sur base de TiO₂ selon la revendication 1, disposant d'une teneur en oxyde métallique et/ou en précurseurs de ceux-ci, mis en œuvre sous la forme d'un tungstate dans une quantité de 8 à 15 % en poids de la quantité totale du dioxyde de titane et de l'oxyde métallique mis en œuvre.

4. Procédé, destiné à produire le matériau catalyseur sur base de TiO₂ selon l'une quelconque des revendications 1 à 3, lors duquel on produit une suspension aqueuse disposant d'une teneur en oxyde de titane hydraté TiO(OH)₂ de 200 à 400 g TiO₂ / L de préférence, on règle la suspension à une valeur pH de l'ordre de 3 à 8 et après un temps de maturation, on la soumet à un traitement hydrothermique, on lave la suspension obtenue et on la filtre et on fait sécher le matériau de forme particulaire filtré, étant ajouté à la suspension au cours du procédé un composé soluble d'un métal, sélectionné parmi le vanadium et le tungstène.

5. Procédé selon la revendication 4, lors duquel l'ajout du composé soluble du métal s'effectue avant le traitement hydrothermique.

6. Procédé selon la revendication 5, lors duquel l'ajout du composé soluble du métal s'effectue après le réglage de la valeur pH à un ordre de 3 à 8 et avant le traitement hydrothermique.

7. Procédé selon l'une quelconque des revendications 5 ou 6, lors duquel on ajoute en tant que métal un composé de vanadium ou de tungstène, de préférence sous la forme d'un vanadate ou d'un tungstate, de manière particulièrement préférentielle, d'un tungstate d'ammonium.

8. Procédé selon l'une quelconque des revendications 5 à 7, lors duquel on règle la suspension avec de l'ammoniac à une valeur pH de l'ordre de 3 à 8.

9. Utilisation du matériau catalyseur fabriqué selon un procédé des revendications 5 à 8 ou du matériau catalyseur sur base de TiO₂ selon l'une quelconque des revendications 1 à 3 pour produire un catalyseur des gaz d'échappement dans des procédés catalyseurs chimiques ou en tant que photo-catalyseur.

10. Utilisation du matériau catalyseur fabriqué selon un procédé des revendications 5 à 8 ou du matériau catalyseur sur base de TiO₂ selon l'une quelconque des revendications 1 à 3 pour éliminer des agents polluants, notamment des oxydes d'azote dans les gaz d'échappement.
